# EUROPÄISCHE PATENTANMELDUNG

(11) **EP 4 749 903 A1**
(43) Veröffentlichungstag der Anmeldung: **27.05.2026**
(21) Anmeldenummer: 25215357.2
(22) Anmeldetag: 12.11.2025
(51) Int. Cl.: H02M 3/00, H02J 7/02, H02M 3/335, H02M 1/00

(54) **ON-BOARD-LADEGERÄT ZUM LADEN EINER HOCHVOLTBATTERIE**

(30) Priorität: 22.11.2024 DE 102024134558
(71) Anmelder: Volkswagen Aktiengesellschaft, 38440 Wolfsburg (DE)
(72) Erfinder: Gaona, Daniel, 38440 Wolfsburg (DE); Kusch, Rüdiger, 38440 Wolfsburg (DE)
(74) Vertreter: Zucker, Volker

(57) **Zusammenfassung**

Die Erfindung betrifft ein On-Board-Ladegerät (1) zum Laden einer Hochvoltbatterie (8), wobei das On-Board-Netz-Ladegerät (1) einen Gleichrichter (3) und einen Wechselrichter (4) aufweist, wobei der Wechselrichter (4) mit einer ersten Primärinduktivität (LP1) und einer zweiten Primärinduktivität (LP2) verbunden ist, wobei der ersten Primärinduktivität (LP1) eine erste Sekundärinduktivität (LS1) und der zweiten Primärinduktivität (LP2) eine zweite Sekundärinduktivität (LS2) zugeordnet ist, wobei der ersten Sekundärinduktivität (LS1) ein erster Gleichrichter (5) und der zweiten Sekundärinduktivität (LS2) ein zweiter Gleichrichter (6) zugeordnet ist, wobei ein positiver Anschluss des ersten Gleichrichters (5) und ein negativer Anschluss des zweiten Gleichrichters (6) mit der Hochvoltbatterie (8) verbunden ist, wobei das Wicklungsverhältnis der Primär- und Sekundärinduktivitäten (LP1, LP2, LS1, LS2) derart gewählt ist, dass der erste Wandler aus erster Primär- und Sekundärinduktivität (LR1, LS1) ein Vielfaches an Leistung überträgt als der zweite Wandler aus zweiter Primär- und Sekundärinduktivität (LP2, LS2), wobei auf der Sekundärseite der ersten Sekundärinduktivität (LS1) zwei weitere Sekundärinduktivitäten (LS3, LS4) mit nachgeschaltetem Gleichrichter (9) und auf der Sekundärseite der zweiten Sekundärinduktivität (LS2) zwei weitere Sekundärinduktivitäten (LS5, LS6) mit nachgeschaltetem Gleichrichter (10) angeordnet sind, wobei die Gleichrichter (9, 10) mit einem Bordnetz mit mindestens einer Niedervoltbatterie (LV) verbunden sind.

## Beschreibung

Die Erfindung betrifft ein On-Board-Ladegerät zum Laden einer Hochvoltbatterie.

Ein solches On-Board-Ladegerät zum Laden einer Hochvoltbatterie ist beispielsweise aus der US 2018/0222333 A1 bekannt. Dieses weist unter anderem an einem Wechselspannungsladeanschluss einen Gleichrichter auf, dem ein bidirektionaler Resonanz-DC/DC-Wandler nachgeschaltet ist. Der Resonanzwandler weist eine Primärinduktivität auf, wobei auf der Sekundärseite eine Sekundärinduktivität für einen Ladekreis für eine Hochvoltbatterie angeordnet ist. Zusätzlich ist auf der Sekundärseite eine weitere Sekundärinduktivität angeordnet, mittels der eine Niedervoltbatterie geladen werden kann.

Aus der WO 2024/233 745 A1, der WO 2024/092 180 A1 und der WO 2022/194 433 A1 sind jeweils On-Board-Ladegeräte zum Laden einer Hochvoltbatterie bekannt, wobei das On-Board-Ladegerät einen Gleichrichter und einen Wechselrichter aufweist. Dabei ist der Wechselrichter mit einer ersten Primärinduktivität und einer zweiten Primärinduktivität verbunden, wobei der ersten Primärinduktivität eine erste Sekundärinduktivität und der zweiten Primärinduktivität eine zweite Sekundärinduktivität zugeordnet ist. Weiter ist der ersten Sekundärinduktivität ein erster Gleichrichter und der zweiten Sekundärinduktivität ein zweiter Gleichrichter zugeordnet. Weiter ist ein positiver Anschluss des ersten Gleichrichters und ein negativer Anschluss des zweiten Gleichrichters mit der Hochvoltbatterie verbunden. Dabei sind auf der Sekundärseite der ersten Sekundärinduktivität eine weitere Sekundärinduktivität mit nachgeschaltetem Gleichrichter und auf der Sekundärseite der zweiten Sekundärinduktivität eine weitere Sekundärinduktivität mit nachgeschaltetem Gleichrichter angeordnet, wobei die Gleichrichter mit einem Bordnetz mit mindestens einer Niedervoltbatterie verbunden sind.

Aus der DE 10 2014 013 039 A1, der DE 10 2018 128 275 A1 und der DE 10 2010 006 125 A1 sind weitere On-Board-Ladegeräte bekannt, bei denen mehrere Sekundärinduktivitäten auf der Sekundärseite eines Wechselrichters angeordnet sind.

Der Erfindung liegt das technische Problem zugrunde, ein On-Board-Ladegerät zum Laden einer Hochvoltbatterie hinsichtlich des Wirkungsgrades zu verbessern.

Die Lösung des technischen Problems ergibt sich durch ein On-Board-Ladegerät zum Laden einer Hochvoltbatterie mit den Merkmalen des Anspruchs 1. Weitere vorteilhafte Ausgestaltungen der Erfindung ergeben sich aus den Unteransprüchen.

Das On-Board-Ladegerät zum Laden einer Hochvoltbatterie weist einen Gleichrichter und einen Wechselrichter auf. Der Wechselrichter ist mit einer ersten Primärinduktivität und einer zweiten Primärinduktivität verbunden. Der ersten Primärinduktivität ist eine erste Sekundärinduktivität und der zweiten Primärinduktivität ist eine zweite Sekundärinduktivität zugeordnet. Weiter ist der ersten Sekundärinduktivität ein erster Gleichrichter und der zweiten Sekundärinduktivität ein zweiter Gleichrichter zugeordnet. Ein positiver Anschluss des ersten Gleichrichters und ein negativer Anschluss des zweiten Gleichrichters ist mit der Hochvoltbatterie verbunden. Dabei ist das Wicklungsverhältnis der Primär- und Sekundärinduktivitäten derart gewählt, dass der erste Wandler aus erster Primär- und Sekundärinduktivität ein Vielfaches an Leistung überträgt als der zweite Wandler aus zweiter Primär- und Sekundärinduktivität. Weiter sind auf der Sekundärseite der ersten Sekundärinduktivität zwei weitere Sekundärinduktivitäten mit nachgeschaltetem Gleichrichter und auf der Sekundärseite der zweiten Sekundärinduktivität zwei weitere Sekundärinduktivitäten mit nachgeschaltetem Gleichrichter angeordnet, wobei die Gleichrichter mit einem Bordnetz mit mindestens einer Niedervoltbatterie verbunden sind. Anschaulich weist das On-Board-Ladegerät zwei Zweige zur Ladung der Hochvoltbatterie und zwei Zweige zum Laden des Bordnetzes auf. Dabei wird der Hauptteil der Leistung zum Laden der Hochvoltbatterie über den ersten Zweig übertragen, was hinsichtlich einer Optimierung des Wirkungsgrades vorteilhaft ist.

Der Wechselrichter und der erste und zweite Gleichrichter können als 2L- oder 3L-Wandler ausgebildet sein und als Halb- oder Vollbrückenschaltung ausgebildet sein.

In einer Ausführungsform ist mindestens dem Gleichrichter der weiteren Sekundärinduktivitäten der ersten Sekundärinduktivität ein Tiefsetzsteller nachgeordnet.

In einer weiteren Ausführungsform ist das On-Board-Ladegerät derart ausgebildet, dass simultan zu einem Laden der Hochvoltbatterie mindestens über die weiteren Sekundärinduktivitäten der ersten Sekundärinduktivität das Bordnetz geladen wird.

In einer weiteren Ausführungsform ist dem Gleichrichter der zweiten Sekundärinduktivität ein Nachregler nachgeordnet, wobei das On-Board-Ladegerät derart ausgebildet ist, dass die Gleichrichter der ersten Sekundärinduktivität und der zweiten Sekundärinduktivität mit gleichem Tastverhältnis und festen Schaltfrequenzen betrieben werden, was deren Ansteuerung erheblich vereinfacht, wobei die Anpassung der Ladespannung für die Hochvoltbatterie durch den Nachregler erfolgt.

Vorzugsweise weist der Nachregler eine Polaritätsauswahl (Unfolder) und einen Tiefsetzsteller auf. Die Polaritätsauswahl kann entfallen, wenn sichergestellt ist, dass die Spannung des ersten Gleichrichters immer unter der maximal zulässigen Ladespannung der Hochvoltbatterie ist.

**In** einer alternativen Ausführungsform sind der Wechselrichter der zweiten Primärinduktivität, der Gleichrichter der zweiten Sekundärinduktivität und der weiteren Sekundärinduktivitäten der zweiten Sekundärinduktivität als aktiv gesteuerte Brückenschaltungen (Triple Active Bridge TAB) ausgebildet. In dieser Ausführungsform kann auf den Nachregler verzichtet werden, wobei die benötigten Ladespannungen für die Hochvoltbatterie und die Bordnetzbatterie durch die aktiv gesteuerten Gleichrichter eingestellt werden.

**In** einer weiteren Ausführungsform ist das On-Board-Ladegerät derart ausgebildet, das Bordnetz aus der Hochvoltbatterie zu laden, wobei mindestens der Ladevorgang über den Gleichrichter der weiteren Sekundärinduktivitäten der ersten Sekundärinduktivität ungesteuert erfolgt.

**In** einer weiteren Ausführungsform ist das On-Board-Ladegerät derart ausgebildet, dass der Gleichrichter der weiteren Sekundärinduktivitäten der zweiten Sekundärinduktivität als gesteuerter Gleichrichter ausgebildet ist oder die Steuerung des Ladevorganges durch den Nachregler erfolgt.

Die Erfindung wird nachfolgend anhand bevorzugter Ausführungsbeispiele näher erläutert. Die Figuren zeigen:
- Fig. 1: ein allgemeines Blockschaltbild eines On-Board-Ladegerätes,
- Fig. 2: eine Schaltungsanordnung eines On-Board-Ladegerätes in einer ersten Ausführungsform beim Laden der Hochvoltbatterie,
- Fig. 3: die Schaltungsanordnung gemäß Fig. 2 beim Laden des Bordnetzes aus der Hochvoltbatterie,
- Fig. 4: eine Schaltungsanordnung eines On-Board-Ladegeräts in einer alternativen Ausführungsform,
- Fig. 5: eine Schaltungsanordnung eines On-Board-Ladegeräts in einer weitere alternativen Ausführungsform beim Laden der Hochvoltbatterie und
- Fig. 6: die Schaltungsanordnung gemäß Fig. 5 beim Laden des Bordnetzes aus der Hochvoltbatterie.

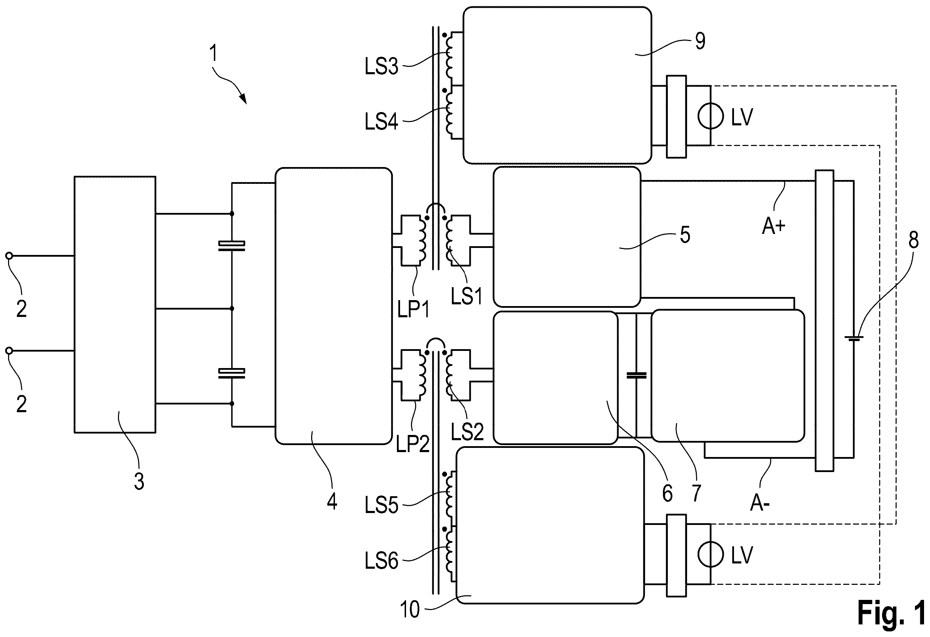

In der Fig. 1 ist die Grundstruktur eines On-Board-Ladegerätes 1 dargestellt. Das On-Board-Ladegerät 1 weist Wechselspannungsladeanschlüsse 2 auf, um das On-Board-Ladegerät 1 mit einer externen Wechselspannungsquelle zu verbinden. Weiter weist das On-Board-Ladegerät 1 einen Gleichrichter 3 auf, der vorzugsweise einen PFC-Filter aufweist. Dabei können zwischen den Wechselspannungsladeanschlüssen 2 und dem Gleichrichter 3 noch weitere EMV-Filter angeordnet sein. Weiter ist ein Wechselrichter 4 vorgesehen, der die gleichgerichtete Ausgangsspannung des Gleichrichters 3 wieder in eine Wechselspannung transformiert. Der Wechselrichter 4 ist mit einer ersten Primärinduktivität LP1 und mit einer zweiten Primärinduktivität LP2 verbunden. Der ersten Primärinduktivität LP1 ist eine erste Sekundärinduktivität LS1 und der zweiten Primärinduktivität LP2 ist eine zweite Sekundärinduktivität LS2 zugeordnet, die jeweils durch einen gemeinsamen Kern gekoppelt sind. Der ersten Sekundärinduktivität LS1 ist ein Gleichrichter 5 nachgeordnet und der zweiten Sekundärinduktivität LS2 ist ein weiterer Gleichrichter 6 nachgeordnet, dem optional ein Nachregler 7 nachgeordnet sein kann. Ein positiver Anschluss A- des ersten Gleichrichters 5 ist mit einem Pluspol einer Hochvoltbatterie 8 verbunden und ein negativer Anschluss A+ des zweiten Gleichrichters 6 ist mit einem Minuspol der Hochvoltbatterie 8 verbunden. Der ersten Sekundärinduktivität LS1 sind noch zwei weitere Sekundärinduktivitäten LS3, LS4 zugeordnet. Ebenso sind der zweiten Sekundärinduktivität LS2 noch zwei weitere Sekundärinduktivitäten LS5, LS6 zugeordnet, d.h. diese sind mit dem gleichen Kern gekoppelt. Die Sekundärinduktivitäten LS3, LS4 sind mit einem Gleichrichter 9 und die Sekundärinduktivitäten LS5, LS6 sind mit einem weiteren Gleichrichter 10 verbunden, die zusätzlich auch noch Tiefsetzsteller aufweisen können. Ausgangsseitig sind die beiden Gleichrichter 9, 10 mit einem Bordnetz verbunden, das mindestens eine Bordnetzbatterie LV aufweist.

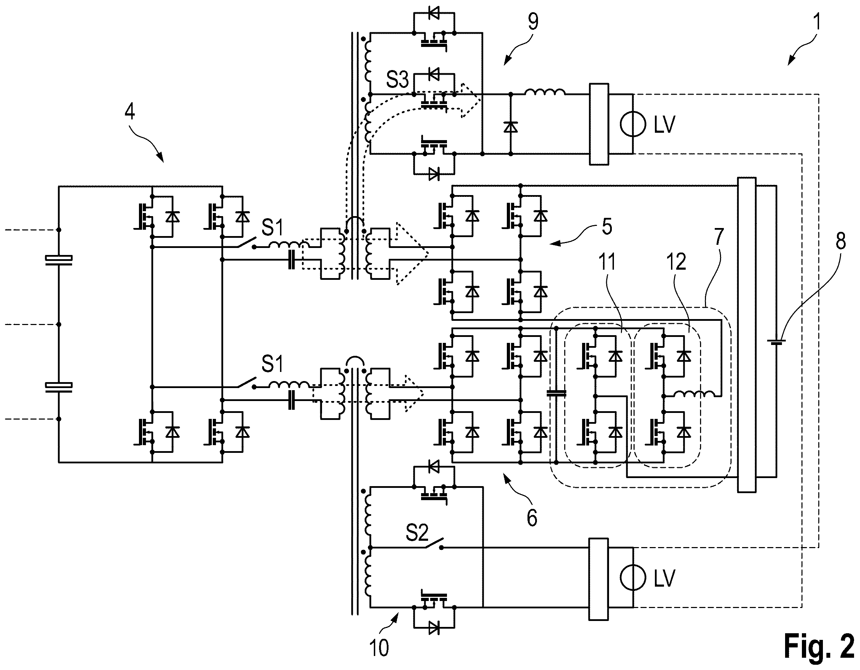

In der Fig. 2 ist eine erste Ausführungsform des On-Board-Ladegeräts 1 dargestellt, wenn aus einer externen Wechselspannung geladen wird, wobei der Gleichrichter 3 (siehe Fig. 1) nicht dargestellt ist. Die Pfeile geben die Richtung des Energieflusses an, wobei die Dicke der Pfeile die Energiemenge symbolisiert. So ist erkennbar, dass die Hauptmenge der Energie über die erste Primärinduktivität LP1 und die erste Sekundärinduktivität LS1 übertragen wird. Der Wechselrichter 4 weist zwei aktive Halbbrücken auf, die jeweils über ein Schaltelement S1 mit der ersten Primärinduktivität LP1 und der zweiten Primärinduktivität LP2 verbunden sind, wobei zusätzlich noch ein Kondensator und eine Spule jeweils an den Induktivitäten LP1, LP2 angeordnet sind, wobei im Ladebetrieb die Schaltelemente S1 geschlossen sind. Die Transistoren des Wechselrichters 4 werden mit einer festen Schaltfrequenz und einem festen Tastverhältnis angesteuert. Die Gleichrichter 5,6 an der ersten Sekundärinduktivität LS1 und an der zweiten Sekundärinduktivität LS2 weisen ebenfalls zwei aktive Halbbrücken mit Transistoren und Freilaufdioden auf. Die Gleichrichter 5, 6 werden ebenfalls mit einer festen Schaltfrequenz und Tastverhältnis angesteuert, wobei die aktive Anpassung der Ladespannung an die Spannung der Hochvoltbatterie 8 durch den Nachregler 7 erfolgt. Der Nachregler 7 weist hierzu eine Polaritätsauswahl 11 (Unfolder) sowie einen Tiefsetzsteller 12 auf. Der positive Anschluss des Gleichrichters 5 und der Mittelabgriff der Polaritätsauswahl 11 liegen dann an dem positiven und negativen Anschluss der Hochvoltbatterie 8, um diese zu laden. Der negative Anschluss des Gleichrichters 5 liegt an einem Mittelabgriff des Tiefsetzstellers 12 an. Gleichzeitig mit dem Laden der Hochvoltbatterie 8 wird das Bordnetz über den Gleichrichter 9 geladen, dem in diesem Ausführungsbeispiel ein Tiefsetzsteller nachgeordnet ist. Dazu wird das Schaltelement S3 getaktet und die Transistoren des Gleichrichters 9 mit einer festen Schaltfrequenz und Taktverhältnis angesteuert, sodass das Bordnetz mit einer konstanten ungeregelten Leistung geladen wird. Der Gleichrichter 10 ist inaktiv und das Schaltelement S2 bleibt offen. Die Regelung des Ladevorgangs erfolgt ausschließlich über den Nachregler 7.

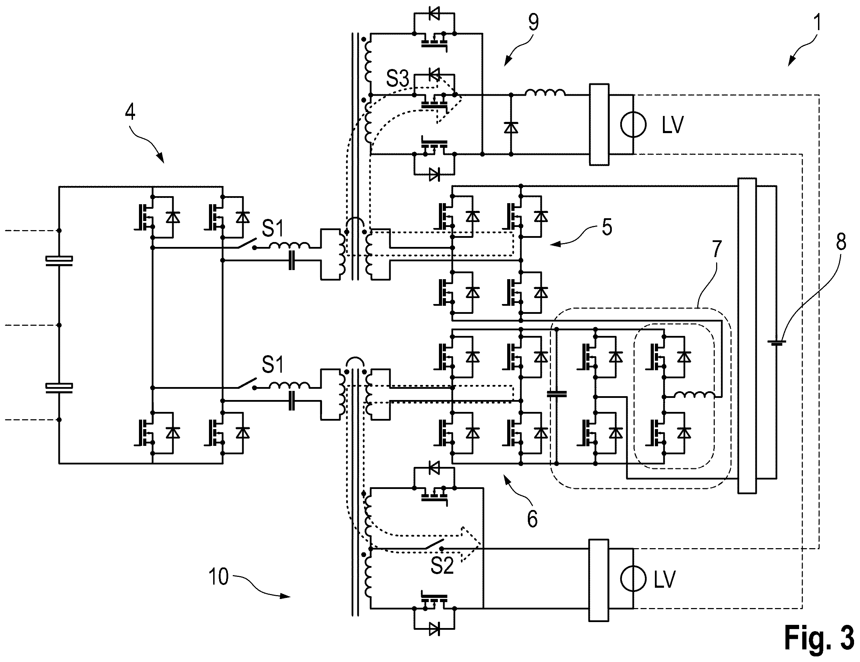

In der Fig. 3 ist der Leistungsfluss beim Laden des Bordnetzes aus der Hochvoltbatterie 8 über das On-Board-Ladegerät 1 dargestellt. Dabei wird das Schaltelement S1 geöffnet, sodass kein Leistungsfluss in Richtung Wechselspannungsladeanschluss 2 fließt. Das Schaltelement S2 wird dauerhaft geschlossen (in der Fig. 3 noch geöffnet dargestellt) und auch das Schaltelement S3 wird dauerhaft geschlossen. Die Gleichrichter 9, 10 arbeiten als ungesteuerte Gleichrichter. Der Nachregler 7 regelt den Leistungsfluss in das Bordnetz, wobei der Großteil der Leistung ungesteuert über den Gleichrichter 5 übertragen wird, der als Wechselrichter betrieben wird. Die Leistungsübertragung erfolgt dabei induktiv von der ersten Sekundärinduktivität LS1 zu den weiteren Sekundärinduktivitäten LS3, LS4 sowie von der zweiten Sekundärinduktivität LS2 zu den zweiten weiteren Sekundärinduktivitäten LS5, LS6.

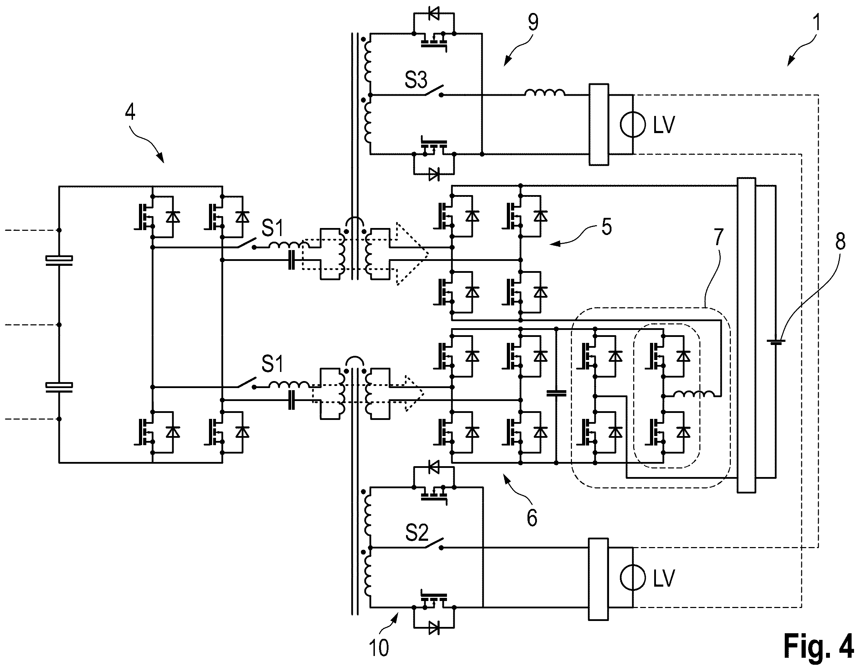

In der Fig. 4 ist eine alternative Ausführungsform dargestellt, wobei der einzige Unterschied zur Ausführungsform gemäß Fig. 2 und Fig. 3 ist, dass der Gleichrichter 9 keinen Tiefsetzsteller aufweist, also die Diode und Drossel entfallen sind. Bei dieser Ausführungsform wird das Bordnetz beim Wechselspannungsladen nicht geladen und das Schaltelement S3 bleibt offen.

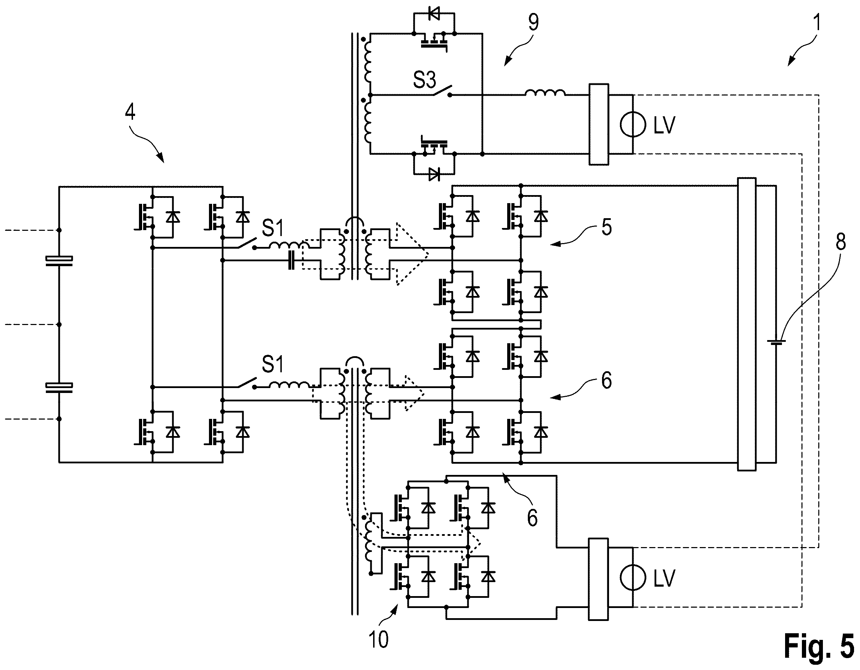

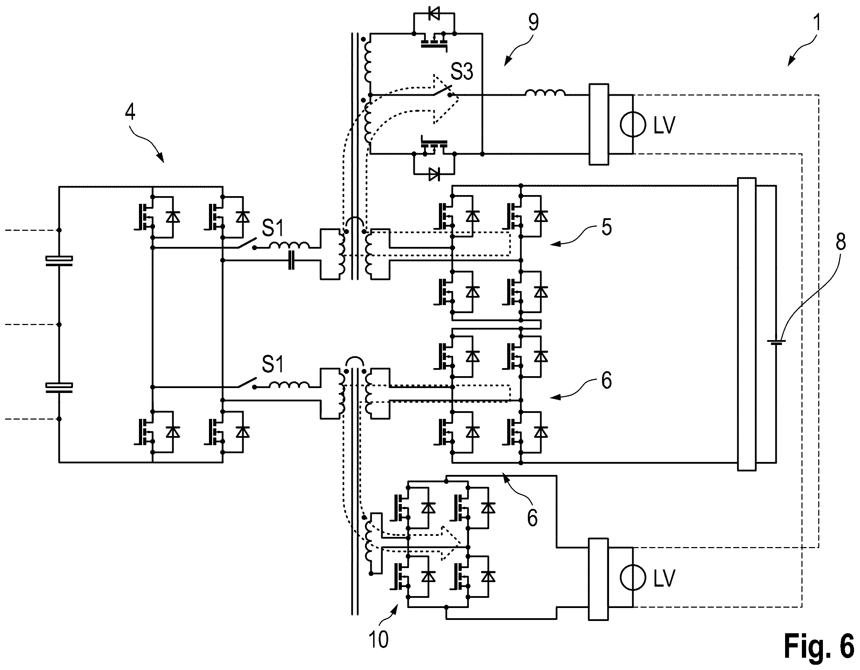

In Fig. 5 und Fig. 6 ist eine weitere alternative Ausführungsform für ein On-Board-Ladegerät 1 dargestellt. Dabei wird auf den Nachregler 7 verzichtet und die beiden Gleichrichter 5 und 6 in Reihe geschaltet. Der Gleichrichter 5 wird wieder mit einer festen Schaltfrequenz betrieben, über den der Hauptfluss der Energie läuft. Der Gleichrichter 10 weist eine aktive Brückenschaltung auf, wobei die Brückenschaltung des Wechselrichters 4, die Brückenschaltung des Gleichrichters 6 und die Brückenschaltung des Gleichrichters 10 als Triple Active Bridge TAB betrieben werden, sodass die Ladeleistung in die Hochvoltbatterie 8 und das Bordnetz geregelt wird. Das Schaltelement S3 bleibt dabei beim Wechselspannungsladen offen, wohingegen die Schaltelemente S1 geschlossen werden. Auch kann auf den Tiefsetzsteller wie in Fig. 4 verzichtet werden. Hierdurch wird die Anzahl der Schalter im System reduziert, wobei der untere Transformator im Vergleich zu den Ausführungen gemäß Fig. 2 bis Fig. 4 etwas größer ausgelegt werden muss.

In der Fig. 6 ist der Leistungsfluss beim Laden des Bordnetzes aus der Hochvoltbatterie 8 dargestellt. Dabei werden vorzugsweise die Schaltelemente S1 geöffnet, sodass aus der Triple Active Bridge TAB eine Dual Active Bridge wird. Dabei kann weiter alternativ vorgesehen sein, dass auf der Primärseite für jeden Kondensator eine Brückenschaltung vorgesehen ist, wobei dann die Schaltelemente S1 entfallen können, da dann die Spannung auf der Primärseite durch die Triple Active Bridge TAB gesteuert werden kann.

### Bezugszeichenliste

- 1: On-Board-Ladegerät
- 2: Wechselspannungsladeanschluss
- 3: Gleichrichter
- 4: Wechselrichter
- 5: Gleichrichter
- 6: Gleichrichter
- 7: Nachregler
- 8: Hochvoltbatterie
- 9: Gleichrichter
- 10: Gleichrichter
- 11: Polaritätsauswahl
- 12: Tiefsetzsteller
- LP1: erste Primärinduktivität
- LP2: zweite Primärinduktivität
- LS1: erste Sekundärinduktivität
- LS2: zweite Sekundärinduktivität
- LS3-LS6: weitere Sekundärinduktivitäten
- LV: Niedervoltbatterie
- S1: Schaltelement
- S2: Schaltelement
- S3: Schaltelement

## Patentansprüche

1. On-Board-Ladegerät (1) zum Laden einer Hochvoltbatterie (8), wobei das On-Board-Ladegerät (1) einen Gleichrichter (3) und einen Wechselrichter (4) aufweist, wobei der Wechselrichter (4) mit einer ersten Primärinduktivität (LP1) und einer zweiten Primärinduktivität (LP2) verbunden ist, wobei der ersten Primärinduktivität (LP1) eine erste Sekundärinduktivität (LS1) und der zweiten Primärinduktivität (LP2) eine zweite Sekundärinduktivität (LS2) zugeordnet ist, wobei der ersten Sekundärinduktivität (LS1) ein erster Gleichrichter (5) und der zweiten Sekundärinduktivität (LS2) ein zweiter Gleichrichter (6) zugeordnet ist, wobei ein positiver Anschluss des ersten Gleichrichters (5) und ein negativer Anschluss des zweiten Gleichrichters (6) mit der Hochvoltbatterie (8) verbunden ist, wobei das Wicklungsverhältnis der Primär- und Sekundärinduktivitäten (LP1, LP2, LS1, LS2) derart gewählt ist, dass der erste Wandler aus erster Primär- und Sekundärinduktivität (LR1, LS1) ein Vielfaches an Leistung überträgt als der zweite Wandler aus zweiter Primär- und Sekundärinduktivität (LP2, LS2), wobei auf der Sekundärseite der ersten Sekundärinduktivität (LS1) zwei weitere Sekundärinduktivitäten (LS3, LS4) mit nachgeschaltetem Gleichrichter (9) und auf der Sekundärseite der zweiten Sekundärinduktivität (LP2) zwei weitere Sekundärinduktivitäten (LS5, LS6) mit nachgeschaltetem Gleichrichter (10) angeordnet sind, wobei die Gleichrichter (9, 10) mit einem Bordnetz mit mindestens einer Niedervoltbatterie (LV) verbunden sind.

2. On-Board-Ladegerät (1) nach Anspruch 1, **dadurch gekennzeichnet, dass** mindestens dem nachgeschalteten Gleichrichter (9) der weiteren Sekundärinduktivitäten (LS3, LS4) der ersten Sekundärinduktivität (LS1) ein Tiefsetzsteller (12) nachgeordnet ist.

3. On-Board-Ladegerät (1) nach Anspruch 2, **dadurch gekennzeichnet, dass** das On-Board-Ladegerät (1) derart ausgebildet ist, dass simultan zu einem Laden der Hochvoltbatterie (8) mindestens über die weiteren Sekundärinduktivitäten (LS3, LS4) der ersten Sekundärinduktivität (LS1) das Bordnetz mit der mindestens einen Niedervoltbatterie (LV) geladen wird.

4. On-Board-Ladegerät (1) nach einem der vorangegangenen Ansprüche, **dadurch gekennzeichnet, dass** dem zweiten Gleichrichter (6) der zweiten Sekundärinduktivität (LS2) ein Nachregler (7) nachgeordnet ist, wobei das On-Board-Ladegerät (1) derart ausgebildet ist, dass die ersten und zweiten Gleichrichter (5, 6) der ersten Sekundärinduktivität (LS1) und der zweiten Sekundärinduktivität (LS2) mit gleichem Tastverhältnis und fester Schaltfrequenz betrieben werden.

5. On-Board-Ladegerät (1) nach Anspruch 4, **dadurch gekennzeichnet, dass** der Nachregler (7) eine Polaritätsauswahl **(11)** und einen Tiefsetzsteller (12) aufweist.

6. On-Board-Ladegerät (1) nach Anspruch 1, **dadurch gekennzeichnet, dass** der Wechselrichter (4) der zweiten Primärinduktivität (LP2), der zweite Gleichrichter (6) der zweiten Sekundärinduktivität (LS2) und der weiteren Sekundärinduktivitäten (LS5, LS6) der zweiten Sekundärinduktivität (LS2) als aktiv gesteuerte Brückenschaltungen ausgebildet sind.

7. On-Board-Ladegerät (1) nach einem der vorangegangenen Ansprüche, **dadurch gekennzeichnet, dass** das On-Board-Ladegerät (1) derart ausgebildet ist, das Bordnetz aus der Hochvoltbatterie (8) zu laden, wobei mindestens der Ladevorgang über den nachgeschalteten Gleichrichter (9) der weiteren Sekundärinduktivitäten (LS3, LS4) der ersten Sekundärinduktivität (LS1) ungesteuert erfolgt.

8. On-Board-Ladegerät (1) nach Anspruch 7, **dadurch gekennzeichnet, dass** der nachgeschaltete Gleichrichter (10) der weiteren Sekundärinduktivitäten (LS5, LS6) der zweiten Sekundärinduktivität (LS2) als gesteuerter Gleichrichter ausgebildet ist oder die Steuerung des Ladevorgangs durch den Nachregler (7) erfolgt.
